# EUROPEAN PATENT APPLICATION

(11) **EP 0 994 410 A2**
(43) Date of publication of application: **19.04.2000**
(21) Application number: 99306994.7
(22) Date of filing: 03.09.1999
(51) Int. Cl.: G06F 3/06, G06F 13/10

(54) **Device for rewriting control information in a disk drive**

(30) Priority: 17.09.1998 JP 26330398
(71) Applicant: ALPS ELECTRIC CO., LTD., Ota-ku Tokyo 145 (JP)
(72) Inventor: Katoh, Masashi, Shibata-gun, Miyagi-ken (JP); Onodera, Keisuke, Furukawa-shi, Miyagi-ken (JP); Kameyama, Yasuaki, Furukawa-shi, Miyagi-ken (JP)
(74) Representative: Kensett, John Hinton

(57) **Abstract**

A control information rewritable disk driving device is provided with a disk rotation driver (32), a reprogrammable ROM (4) which stores control information therein, a general-purpose interface (6) which is selectively connected to an externally-provided host control device (10) and performs the transmission and reception of data to and from the host control device upon connection, and a CPU (2) for controlling the operation of each part according to the control information. When a control information rewrite command and new control information are supplied from the host control device (10) to the CPU (2) through the general-purpose interface (6) when the general-purpose interface and the host control device are connected to one another, the CPU renews the control information stored in the reprogrammable ROM to new control information.

## Description

The present invention relates to a control information erasable and programmable or rewritable disk driving device and a rewriting method therefor, and particularly to a control information rewritable disk driving device capable of rewriting control information for a controller, which is stored in a ROM (Read-Only Memory), by relatively simple means and a rewriting method therefor.

A disk driver or driving device is normally used to rotatably drive a disk medium such as a CD-ROM or the like and read information recorded on the disk medium. The present disk driving device is provided with at least a disk rotation driver, a ROM having control information such as control programs, control parameters, etc. stored therein, and a controller for controlling the operation of each part according to the control information. The disk driving device is one which rotatably drives the disk medium, based on the control information stored in the ROM and reads the information recorded on the disk medium while being rotatably driven.

On the other hand, the control information stored in the ROM normally remains unchanged in the disk driving device. However, when new control information is used in place of the present control information stored in the ROM according to demands, the control information stored in the ROM might be renewed or rewritten.

In the already-known disk driving device, one (hereinafter called "first means") has heretofore been known which is executed through a procedure for first disconnecting a ROM inserted into a socket from the socket when the control information stored in the ROM is rewritten, next effecting control information renewal on the disconnected ROM by using an information writing device such as a ROM writer or the like, and thereafter inserting the thus-processed ROM into the socket to reset it.

In the already-known disk driving device, another one (hereinafter called "second means") has also been known wherein when control information stored in a ROM is rewritten, an electrically programmable and erasable ROM such as an EEPROM is used as a ROM and a serial interface designed specifically for rewriting or renewal is additionally provided, whereby the control information stored in the EEPROM is rewritten through the interface without disconnecting the EEPROM from a socket.

The first means for rewriting the control information stored in the ROM in the already-known disk driving device has a problem in that since the ROM is disconnected from the socket and inserted therein to reset the ROM, much labor is required for rewriting of the control information.

The second means for rewriting the control information stored in the ROM in the already-known disk driving device has an advantage in that since it is unnecessary to disconnect the ROM from the socket and insert the ROM therein to reset it, much time and efforts become unnecessary. However, the second means for rewriting the control information has a new problem in that since the control information is rewritten by using the special interface equivalent to the serial interface designed specifically for rewriting, the special interface is additionally required, and the preparation of the special interface used only upon the rewriting of the control information on purpose is impractical and correspondingly the manufacturing cost increases.

With the foregoing problems in view, it is therefore an object of the present invention to provide a control information rewritable disk driving device which uses general-purpose components and renews or rewrites control information stored in a ROM by simple means, and a rewriting method therefor.

In order to achieve the above object, a control information rewritable disk driving device according to the present invention comprises a disk rotation driver, a reprogrammable ROM which stores control information therein, a general-purpose interface which performs the transmission of data to an externally-provided host control device and the reception of data therefrom, a controller activated based on the control information, and means for allowing the controller to renew the control information stored in the reprogrammable ROM to new control information when a control information rewrite command and the new control information are supplied from the host control device to the controller through an interface upon connection between the general-purpose interface and the host control device.

When the externally-provided host control device and the general-purpose interface are connected to each other and the control information rewrite command and new control information are supplied from the host control device to the controller through the general-purpose interface, the controller is activated so as to replace the present control information stored in the reprogrammable ROM with new control information, whereby the rewriting of the control information stored in the reprogrammable ROM is performed.

The rewriting of the control information is electrically performed using the reprogrammable ROM as a ROM for storing the control information therein. Further, the rewriting thereof is performed using the general-purpose interface. Therefore, the control information can be easily rewritten by simply using simple components without requiring special components.

Preferably, the optical disk device of the present invention, a control information rewritable disk driving device is additionally provided with a RAM connected to the controller and the reprogrammable ROM respectively, and when the control information stored in the reprogrammable ROM is rewritten, the present control information and new control information are temporarily stored in the RAM.

In a preferred embodiment of the control information rewritable disk driving device, since the control information of the reprogrammable ROM is restored to the present control information when some error occurs in the course of the rewriting of the control information, it is possible to avoid an inability to perform control operation of the controller of the disk driving device.

Further, in a preferred embodiment of an optical disk device of the present invention, a control information rewritable disk driving device is additionally provided with an error detector connected to a controller. When the error detector has detected an error in the course of the rewriting of control information in a reprogrammable ROM, the error detector transmits error information to a host control device and resets the operation of the rewriting of the control information in the reprogrammable ROM.

A method of rewriting control information which is suitable for use in a disk driving device, having a disk rotation driver, a reprogrammable ROM which stores control information therein, an interface part which is selectively connected to an externally-provided host control device and performs the transmission and reception of data to and from the host control device upon the connection, a RAM, and a controller for controlling the operation of each part according to the control information, sequentially executes the following steps: a first step for installing rewrite utility in the host control device to store new control information; a second step for connecting the host control device and the interface part to each other to thereby transmit a control information rewrite command and the new control information from the host control device to the controller through the interface part; a third step for copying the present control information of the reprogrammable ROM and the new control information onto the RAM under the control of the controller; and a fourth step for writing the new control information copied onto the RAM into the reprogrammable ROM under the control of the controller.

In a preferred method of rewriting control information according to the present invention, the method of rewriting control information which is suitable for use in a disk driving device, executes an added second step for additionally installing an error detector in the disk driving device and causing the error detector to check errors of a control information rewrite command and new control information after the execution of the second step and an added fourth step for checking an error between new control information copied onto the RAM and new control information written into the reprogrammable ROM after the execution of the fourth step, executes a fifth step for transmitting error information to the host control device under the control of the controller and resetting the operation of rewriting of the control information in the reprogrammable ROM when the error is detected in accordance with the error check executed in the added second or fourth step, and executes a sixth step for transmitting rewrite end information to the host control device under the control of the controller when the new control information is written into the reprogrammable ROM in a normal state.

Preferably, when the externally-provided host control device and the general-purpose interface of the disk driving device are connected to one another and the program rewrite command and new control information are supplied from the host control device to the controller through the general-purpose interface, the controller renews the present control information stored in the reprogrammable ROM to similarly-supplied new control information in response to the supplied control information rewrite command, whereby the rewriting of the control information stored in the reprogrammable ROM is performed.

At this time, the reprogrammable ROM is used as the ROM which stores the control information therein, and the rewriting of the control information is electrically carried out. Further, the reception of the program rewrite command and the new control information is performed by the general-purpose interface. Therefore, the control information stored in the ROM can be easily rewritten by simply using simple components without having to use special components, and the version of the control information can be suitably upgraded.

Further, according to a preferred method suitable for use in the disk driving device, since the control information of the reprogrammable ROM is restored to the present control information when some error occurs in the course of the rewriting of the control information, it is possible to avoid an inability to perform control operation of the controller of the disk driving device in addition to the functions obtained by the first embodiment and the third embodiment.

An embodiment of the present invention will now be described, by way of example only, with reference to the accompanying drawings in which:
Fig. 1 is a block diagram showing a configuration of one mode of embodiment of a control information rewritable disk driving device according to the present invention.
Fig. 2 is a flowchart for describing operating particulars of the control information rewritable disk driving device according to the present mode of embodiment at the time that control information is rewritten thereby.

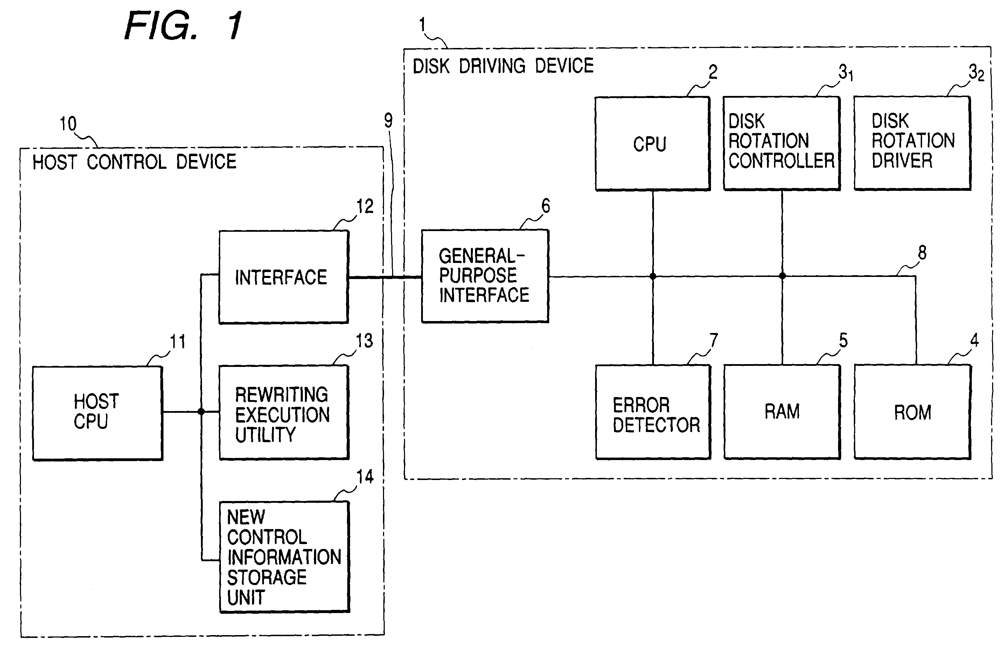

As shown in Fig. 1, the control information rewritable disk driving device 1 according to the mode of present embodiment comprises a controller (CPU) 2 for activating the disk driving device 1 over its entirety, a disk rotation controller 3₁ for controlling the rotation of a disk medium such as a CD-ROM or the like, a disk rotation driver 3₂ for reading information stored in the disk medium, a rewritable ROM 4 such as a flash ROM or the like which stores therein control information for operating the CPU 2, a random access memory (RAM) 5, a general-purpose interface 6 such as an ATAPI interface (AT ATTACHEMENT PACKET INTERFACE) or the like, an error detector 7 for detecting errors of a program rewrite command, control information, etc., and a common bus 8. The common bus 8 has the function of interconnecting the CPU 2, the disk driving units 3, the flash ROM 4, the RAM 5, the general-purpose interface 6 and the error detector 7 with one another.

A host computer (host control device) 10 selectively connected to the control information rewritable disk driving device 1 through a transmission line 9 comprises a host controller (host CPU) 11 for activating the entire host control device 10, an interface 12, a conversion utility install part (reprogramming or rewriting execution utility) 13, and a new control information storing part (new control information storage unit) 14. The host CPU 11 is connected to the interface 12, the rewriting execution utility 13 and the new control information storage unit 14 respectively.

The control information rewritable disk driving device 1 constructed as described above is normally connected to the host control device 10 through the transmission line 9. Namely, the general-purpose interface 6 on the disk driving device 1 side and the interface 12 on the host control device 10 side are placed in a connected state therebetween. Various data written into the disk medium and various data read from the disk medium are respectively transmitted via the general-purpose interface 6, the transmission line 9 and the interface 12.

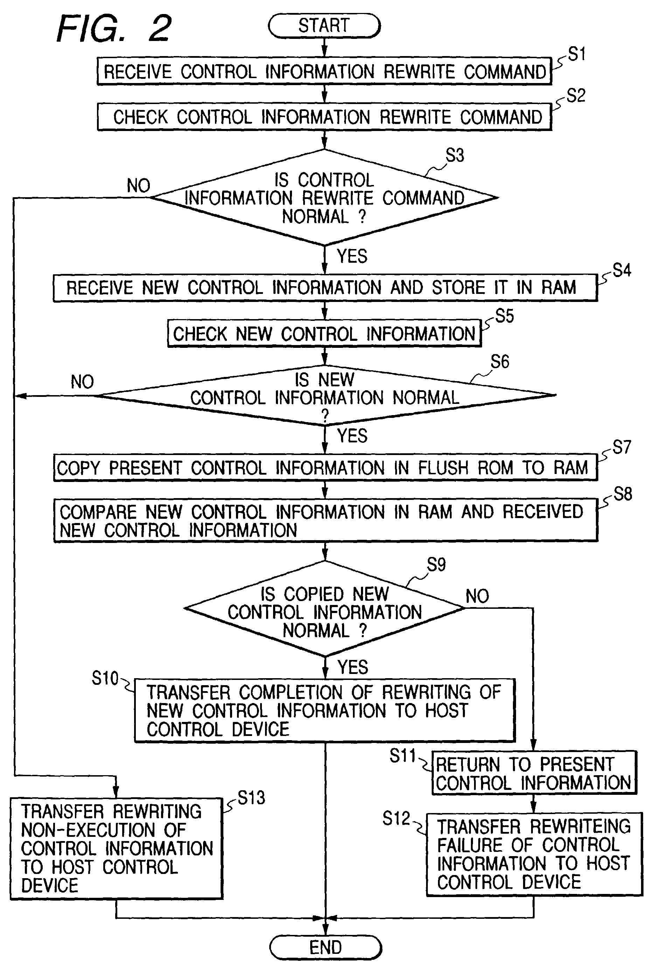

Now, Fig. 2 is a flowchart for describing particulars of operation of the control information rewritable disk driving device 1 according to the mode of present embodiment at the time that control information is rewritten or renewed thereby.

The operation of the control information rewritable disk driving device 1 according to the mode of present embodiment at the time that the control information stored in the flash ROM 4 is updated and changed thereby, will be explained by using the flowchart shown in Fig. 2.

Prior to the execution of the flowchart illustrated in Fig. 2, the control information rewritable disk driving device 1 and the host control device 10 perform the following processes.

In the host control device 10, conversion utility for renewing or rewriting control information is first installed on the conversion utility 13 and new control information is then inputted to the new control information storage unit 14.

At this time, the general-purpose interface 6 of the control information rewritable disk driving device 1 and the interface 12 of the host control device 10 are respectively connected to one another by the transmission line 9.

Next, the host CPU 11 on the host control device 10 side is activated to generate a control information rewrite command from the conversion utility 13 and transmit the control information rewrite command from the interface 12 to the general-purpose interface 6 on the control information rewritable disk driving device 1 side through the transmission line 9.

Then, the host CPU 11 on the host control device 10 side is activated to read new control information from the new control information storage unit 14 and transmit the new control information from the interface 12 to the general-purpose interface 6 on the control information rewritable disk driving device 1 side through the transmission line 9.

Thereafter, the flowchart illustrated in Fig. 2 is executed on the control information rewritable disk driving device 1 side.

In Step S1, the controller 2 first receives a program rewrite command therein through the general-purpose interface 6.

Next, in Step S2, the error detector 7 checks the control information rewrite command received by the controller 2.

In Step S3, the error detector 7 then determines whether the control information rewrite command received by the controller 2 is a normal one. When it is determined that the command information rewrite command is of the normal one (when the answer is found to be Yes (Y)), the routine procedure is shifted to the next Step S4. On the other hand, when it is determined that the control information rewrite command is not normal (when the answer is found to be No (N)), the routine procedure is shifted to another Step S14.

In Step S4 subsequent to Step S3, the controller 2 receives new control information through the general-purpose interface 6 and causes the RAM 5 to store the received new control information therein.

In Step S5, the error detector 7 then checks for the new control information received by the controller 2.

Next, in Step S6, the error detector 7 makes a decision as to whether the new control information received by the controller 2 is normal. When the new control information is found to be normal (when the answer is found to be Yes (Y)), the routine procedure is shifted to Step S7. On the other hand, when the new control information is found not to be normal (when the answer is found to be No (N)), the routine procedure is shifted to another Step S14.

Next, in Step S7, the controller 2 copies the present control information stored in the flash ROM 4 onto the RAM 5. At this time, the controller 2 is activated in accordance with the present control information copied onto the RAM 5.

In Step S8 subsequent to the above Step, the error detector 7 compares the new control information copied onto the RAM 5 with the received new control information and checks for the copied new control information.

In Step S9 subsequent to the above Step, the error detector 7 determines, based on the result of comparison in Step S8 whether the new control information copied onto the RMA 5 is normal. When the copied new control information is found to be normal (when the answer is found to be Yes (Y)), the routine procedure proceeds to the next Step S10. On the other hand, when the new control information is found not to be normal (when the answer is found to be No (N)), the routine procedure proceeds to another Step S11.

Next, in Step S10, the controller 2 writes the new control information copied onto the RAM 5 into the flash ROM 4. When the writing of the new control information therein is completed, the controller 2 transfers the completion of the reprogramming or rewriting of the new control information from the general-purpose interface 6 to the host control device 10 through the transmission line 9. Simultaneously, the disk driving device is reset to complete this series of operations.

In Step S11, the controller 2 writes the present control information copied onto the RAM 5 into the flash ROM 4 and thereby restores the ROM 4 to a state prior to the rewriting or reprogramming of the control information.

Next, in Step S12, the controller 2 transfers a failure in the rewriting of the new control information from the general-purpose interface 6 to the host control device 10 through the transmission line 9. Simultaneously, the disk driving device is reset to complete this series of operations.

In Step S13, the controller 2 further transfers the non-execution of rewriting of the control information stored in the flash ROM 4 from the general-purpose interface 6 to the host control device 10 through the transmission line 9. Simultaneously, the disk driving device is reset to complete this series of operations.

When the externally-provided host control device 10 and the general-purpose interface 6 are connected to one another and the control information rewrite command and new control information are supplied from the host control device 10 to the CPU 2 through the general-purpose interface 6, the CPU 2 renews the present control information stored in the reprogrammable ROM 4 to the new control information to perform the rewriting of the control information. The rewriting of the control information is electrically performed using the ROM 4 reprogrammable as a ROM which stores the control information therein. Further, the rewriting of the control information is also carried out by using the general-purpose interface 6. Therefore, the control information can be easily rewritten by simply using simple components without having to use components each having a special configuration and the version of the control information can be suitably upgraded.

In a preferred embodiment there is provided the error detector 7. Thus, when some error occurs in the course of the rewriting of the control information, the error detector 7 detects the occurrence of the error and restores the control information of the reprogrammable ROM to the present control information. It is therefore possible to avoid beforehand, an inability to perform the control operation of the controller of the disk driving device due to the fact that inaccurate control information has been written into the reprogrammable ROM.

In this case, the above-described mode of embodiment has been described by an example in which the control information is rewritten through the use of the RAM 4 and the error detector 7. However, while the RAM 4 and the error detector 7 may preferably be used in the present invention, the present invention does not necessarily require them. When new control information is received after the reception of a program rewrite command, the control information rewritable ROM 4 may be directly reprogrammed by using the new control information. After the RAM 4 is provided and the present control information and new control information have been copied onto the RAM 4, the control information rewritable ROM 4 may be reprogrammed by using the new control information.

Further, the above embodiment has been described by an example in which the ATAPI interface is used as the general-purpose interface 6. However, the general-purpose interface 6 employed in the preferred embodiment is not limited to the ATAPI interface and may use an SCSI interface, a USB interface, an IEEE1394 interface or the like.

Furthermore, the aforementioned embodiment has been described by an example in which the host control device used as a source for supplying new control information is a host computer. However, the host control device employed in the present invention is not necessarily limited to the host computer. The Internet or the like may be used if ones capable of supplying new control information or conversion utility are adopted.

In a preferred embodiment, when an externally-provided host control device and a general-purpose interface of the disk driving device are connected to one another and a program rewrite command and new control information are supplied from the host control device to a controller through an interface, the controller renews the present control information stored in a reprogrammable ROM to similarly-supplied new control information in response to the supplied control information rewrite command to thereby perform the rewriting of the control information. Therefore, the control information is electrically rewritten by using the ROM reprogrammable as a ROM which stores the control information therein. Further, the reception of new control information or the like is performed by the general-purpose interface. Therefore, an advantageous effect can be brought about in that the control information stored in the ROM can be rewritten by simply using simple components without having to use special components. Another advantageous effect can be obtained in that the version of the control information can be suitably upgraded.

An advantageous effect can be obtained in addition to the above-described effects in that since an error detector is provided, and when some error occurs in the course of the rewriting of control information, the error detector detects the occurrence thereof and restores control information stored in a reprogrammable ROM to the present control information, an inability to perform a control operation of a controller of the disk driving device due to the fact that inaccurate control information has been written into the reprogrammable ROM, can be avoided beforehand.

## Claims

1. A control information rewritable disk driving device, comprising:
a disk rotation driver;
a reprogrammable ROM which stores control information therein;
a general-purpose interface which is selectively connected to an externally-provided host control device and performs the transmission of data to said host control device and the reception of data therefrom upon said connection; and
a controller for controlling the operation of each part according to the control information; and
wherein when a control information rewrite command and new control information are supplied from said host control device to said controller through said general-purpose interface upon the connection of said general-purpose interface to said host control device, said controller renews the control information stored in said reprogrammable ROM to new control information.

2. The control information rewritable disk driving device according to claim 1, wherein a RAM connected to said controller and said reprogrammable ROM respectively is provided and when the control information stored in said reprogrammable ROM is rewritten, the present control information and new control information are temporarily stored in said RAM.

3. The control information rewritable disk driving device according to claims 1 or 2, wherein an error detector connected to said controller is provided and when said error detector detects an error in the course of the rewriting of the control information stored in said reprogrammable ROM, said error detector transmits error information to said host control device and resets the rewriting operation of the control information stored in said reprogrammable ROM.

4. A method of rewriting control information, which is suitable for use in a disk driving device having a disk rotation driver, a reprogrammable ROM which stores control information therein, a general-purpose interface which is selectively connected to an externally-provided host control device and performs the transmission and reception of data to and from said host control device upon said connection, a RAM, and a controller for controlling the operation of each part according to the control information, said method sequentially executing the following steps:
a first step for installing rewrite utility in said host control device to store new control information;
a second step for connecting said host control device and said general-purpose interface to each other to thereby transmit a control information rewrite command and the new control information from said host control device to said controller through said general-purpose interface;
a third step for copying the present control information of said reprogrammable ROM and the new control information onto said RAM under the control of said controller; and
a fourth step for writing the new control information copied onto said RAM into said reprogrammable ROM under the control of said controller.

5. The method according to claim 4, which executes an added second step for installing an error detector in said disk driving device and causing said error detector to check errors of said control information rewrite command and the new control information after the execution of said second step and an added fourth step for checking an error between new control information copied onto said RAM and new control information written into said reprogrammable ROM after the execution of said fourth step, executes a fifth step for transmitting error information to said host control device under the control of said controller and resetting the operation of rewriting of the control information in said reprogrammable ROM when the error is detected in accordance with the error check executed in said added second or fourth step, and executes a sixth step for transmitting rewrite end information to said host control device under the control of said controller when the new control information is written into said reprogrammable ROM in a normal state.
